# EUROPÄISCHE PATENTSCHRIFT

(11) **EP 2 566 622 B1**
(45) Veröffentlichungstag und Bekanntmachung des Hinweises auf die Patenterteilung: **12.04.2017**
(21) Anmeldenummer: 11728770.6
(22) Anmeldetag: 03.05.2011
(51) Int. Cl.: B01L 7/00, B01F 11/00

(54) **KONDENSATVERMEIDUNGSHAUBE**
CONDENSATE PREVENTION HOOD
COUVERCLE PERMETTANT D'ÉVITER UN CONDENSAT

(30) Priorität: 03.05.2010 DE 102010019232
(43) Veröffentlichungstag der Anmeldung: 13.03.2013
(73) Patentinhaber: Eppendorf AG, 22354 Hamburg (DE)
(72) Erfinder: BAUMGARTNER, Matthias, 22393 Hamburg (DE); GERRIT, Walter, 22769 Hamburg (DE); DÜRR, Florian, 22607 Hamburg (DE); RÖHRS, Janine, 22307 Hamburg (DE); SCHARFRINSKI, Arne, 23843 Bad Oldesloe (DE)
(74) Vertreter: Hoffmann Eitle
(86) Internationale Anmeldenummer: PCT/EP2011/002191
(87) Internationale Veröffentlichungsnummer: WO 2011/138003

(56) Entgegenhaltungen:
- EP-A1- 2 340 891
- WO-A1-2004/105061
- WO-A1-2006/045477
- WO-A2-02/26386
- WO-A2-2008/135565
- US-A1- 2009 120 104

## Beschreibung

Die vorliegende Erfindung betrifft eine Vorrichtung zum Temperieren von Laborgefäßen mit mindestens einer Gefäßaufnahme zur Aufnahme der Laborgefäße, mindestens einem abnehmbar ausgestalteten Peripheriegerät und mit einem Basisgerät, das eine Temperiervorrichtung und eine Halterung zum Aufsetzen des mindestens einen abnehmbaren Peripheriegeräts in einer definierten Position hat, sowie auch das Peripheriegerät für diese Vorrichtung.

Vorrichtungen zum Temperieren von Laborgefäßen, insbesondere auch solche die zusätzlich zu dem Temperieren auch noch die Laborgefäße in eine Mischbewegung versetzten (temperierte Mischer) sind hinlänglich bekannt. Die vorbekannten Vorrichtungen haben Halter in die Laborgefäße, oder Gruppen von Laborgefäßen eingesetzt werden. Laborgefäße sind üblicherweise genormt. So gibt es zum Beispiel Laborgefäße mit 0,2 ml, 0,5 ml, 1,5 ml und 2,0 ml Inhalt. Ferner gibt es zum Beispiel Cryo-Gefäße, Falcon-Gefäße (zum Beispiel 15 ml und 50 ml), Glasgefäße und Bechergläser, Microtiterplatten mit zum Beispiel 96 oder 384 Gefäßen (MTP), Deep Well Platten (DWP) oder PCR-Platten mit zum Beispiel 96 Gefäßen (wells). Diese Aufzählung ist nicht abschließend, deutet aber an, in welcher großen Vielfalt Laborgefäße und Gefäßverbunde existieren, für die die Mischer geeignet sein sollten.

Die schon erwähnten Halter der Laborgefäße oder Gefäßverbunde an den Vorrichtungen können austauschbar sein (so genannte "Wechselblöcke"). Weil die Wechselblöcke meistens so aufgebaut sind, dass die Einzelgefäße von oben dort hinein gesteckt werden, hat sich für die bekannten Mischer bevorzugt eine kreisförmig translatorische wiederkehrende Mischbewegung etabliert, die im wesentlichen in einer horizontalen Ebene abläuft und auch als Orbitalbewegung zu beschreiben ist. Zu diesem Zweck sind die bekannten Mischer in aller Regel mit einem Exzenterantrieb ausgestattet, der bevorzugt durch einen Elektromotor angetrieben wird. Der Exzenterantrieb ist mit einer Platte, die im Fachjargon auch als "Tisch" bezeichnet wird, verbunden. Die Platte dient als Aufnahmevorrichtung für eine Gefäßhaltevorrichtung, die austauschbar als einen sogenannter metallener Wechselblock ausgestaltet sein kann oder auch fest installiert, d.h. nicht austauschbar, Üblicherweise ist die Gefäßhaltevorrichtung an der Platte festgeschraubt. Der Exzenterantrieb setzt die Platte mit Gefäßhaltevorrichtung in die kreisförmige Orbitalbewegung. Üblicherweise werden solche Mischer mit einer Drehfrequenz von 200 U/min bis 3.000 U/min angetrieben, es sind aber auch Drehfrequenzen von 100 U/min bis 10.000 U/min möglich. Die Frequenz ist in aller Regel einstellbar.

Die Vorrichtung zum Temperieren von Laborgefäßen kann bekanntlich für einen Wechselblock eine Aufnahmevorrichtung vorsehen, auf deren Oberseite eine Wärmequelle oder-senke der Temperiervorrichtung eine Kontaktfläche erwärmt, die mit der Unterseite des Wechselblocks in wärmeleitenden Kontakt steht. Diese Kontaktfläche auf der Aufnahmevorrichtung ist somit in Wärmeleitungsverbindung mit dem darauf montierten Wechselblock.

Wechselblöcke bestehen üblicherweise im Wesentlichen aus gut wärmeleitenden Werkstoffen wie Metallen, insbesondere aus Aluminium oder Silber, wobei der Block massiv aufgebaut sein oder eine erodierte Struktur aufweisen kann, die zur Gewichtserleichterung nur noch Strukturen für die Probeaufnahme und einen guten Wärmetransport von der Unterseite des Wechselblocks zu den Gefäßen hat. Um den wärmeleitenden Kontakt mit der temperierten Kontaktseite der Aufnahmevorrichtung herzustellen, sind solche Wechselblöcke, bekanntlich auf der Aufnahmevorrichtung festgeschraubt. Die Schrauben lassen sich relativ einfach mit Hilfe eines Werkzeugs wie eines Schraubendrehers lösen, so dass der Wechselblock ausgetauscht werden kann zum Beispiel gegen einen Wechselblock für Laborgefäße anderer Größe.

Insbesondere für die Vorrichtungen mit Temperierfunktion ist es bekannt, zum Vermindern von Kondensat in den Gefäßen einen Raum um die Gefäßhaltevorrichtung durch eine Haube zu überdecken und so gemeinsam mit dem Gehäuse der Temperiervorrichtung und/oder der Gefäßhaltevorrichtung thermisch gewissermaßen isolierend zu umschließen. Dies bewirkt, dass durch die Temperiervorrichtung nicht nur die Gefäße in der Aufnahmevorrichtung, sondern auch deren unmittelbare Umgebung erwärmt wird, ohne sich mit der weiteren Umgebung auszutauschen. Dies vermindert das Kondensieren von möglicherweise in den Gefäßen aufgrund der Erwärmung verdampfter Flüssigkeit an den (ohne die Haube kühleren) freiliegenden Gefäßwänden (besonders am Gefäßdeckel). Dies ist ein Effekt, den man zum Beispiel an kalten Fensterscheiben beobachten kann, an denen sich Kondenswasser wärmerer Innenraumluft niederschlägt.

Des Weiteren ist für solche Vorrichtungen mit Hauben bekannt, diese Hauben selber über Heizelemente in der Haube zu beheizen, z.B, Heizfolien. Die Stromversorgung dieser Heizelemente in den bekannten Hauben erfolgt entweder über eine lösbare galvanische Verbindung zum Basisgerät mit Temperierfunktion (gerätevermittelte Stromversorgung) oder zu einer zentralen externen elektrischen Energiequelle, wie eine Steckdose. Beiden ist gemein, dass die Haube ein steckerähnliches galvanisches Kontaktelement aufweist, das vom Anwender in die Hand genommen werden muss und aktiv an der eigentlichen Vorrichtung oder der externen elektrischen Energiequelle eingesteckt werden muss.

Die WO 02/26386 A2 beschreibt eine Anordnung eines "*Intergrated Vessel Transporters*", der dafür genutzt wird, den Behälter von einer ersten Station zu einer zweiten Station in einem automatisierten Laborsystem transportieren. Die WO 2006/045477 A1 beschreibt eine Vorrichtung zum Schütteln, die ein Tablar mit Haltern für Schüttelkolben aufweisen kann.

Der vorliegenden Erfindung liegt die Aufgabe zugrunde, eine Vorrichtung zum Behandeln von Laborgefäß-Inhalten einfacher und betriebssicherer handhabbar zu machen.

Diese Aufgabe wird erfindungsgemäß von einer Vorrichtung mit den Merkmalen des Anspruchs 1 und von einem Peripheriegerät mit den Merkmalen des Anspruchs 17 gelöst. Bevorzugte Ausgestaltungen sind in den Unteransprüchen angegeben.

Es wurde herausgefunden, dass die erfindungsgemäße Vorrichtung zum Temperieren von Laborgefäßen bestehend aus einem Basisgerät mit Temperiervorrichtung und Halterung für das Peripheriegerät, mindestens einem Peripheriegerät und Gefäßaufnahmen einfacher und betriebssicherer handhabbar ist. Entscheidend für die einfachere Handhabbarkeit und höhere Betriebssicherheit ist die Eigenschaft der Vorrichtung, dass sich beim Aufsetzen des Peripheriegeräts auf das Basisgerät sich selbsttätig ein lösbares Kopplungspaar bildet, durch das elektrische Leistung und/oder mindestens ein Signal übertragbar ist.

Der Begriff "selbsttätig" heißt in diesem Kontext, dass sich das Kopplungspaar ausbildet ohne das die jeweiligen Kopplungselemente vom Anwender in die Hand genommen werden müssten und ineinander geführt werden müssten. Der Anwender setzt somit das Peripheriegerät auf eine Halterung auf dem Basisgerät auf ohne die Kopplungselemente selber berühren zu müssen. Für den Anwender im Laborbereich hat dies den Vorteil, dass die Gefahr des zufälligen Berührens von heißen Oberflächen der sich auf dem Basisgerät befindenden Temperiervorrichtungen reduziert ist. Der Anwender berührt des Weiteren keine möglicherweise unter Spannung stehenden Teile. Da der Anwender, der im Labor auch mit biologischen oder chemischen Substanzen arbeitet, die potentiell gesundheitsgefährdend sind, insgesamt weniger Teile der Vorrichtung berühren muss, ergibt sich daraus eine Verminderung des Kontaminationsrisikos der Vorrichtung. Weniger Teile der Vorrichtung müssen gereinigt bzw. dekontaminiert werden. Des Weiteren ist die Reinigung des Gerätes insgesamt einfacher, da keine schwer zugänglichen und empfindlichen Teile gereinigt werde müssen. Die erfindungsgemäße Vorrichtung ist somit insgesamt betriebssicherer und einfacherer zu Handhaben.

Das selbsttätige Ausbilden eines Kopplungspaares zwischen Basisgerät und Peripheriegerät, durch das insbesondere auch ein Signal vom Peripheriegerät zum Basisgerät und auch umgekehrt, d.h. vom Basisgerät zum Peripheriegerät übertragbar ist, ermöglicht ein sehr schnellen Informationsaustausch zwischen diesen Teilen der Vorrichtung. Dies ist in zweierlei Hinsicht vorteilhaft. Zum einen vereinfacht dies die Herstellung der Vorrichtung, da das Basisgerät und das Peripheriegerät separat hergestellt werden können, wobei gerätetypische Informationen auf dem jeweiligen Gerät in einem Speichermedium, vorzugsweise einem integrierten Schaltkreis und insbesondere bevorzugt einem Speicherchip hinterlegt werden können. Solche gerätetypischen Informationen sind für einen wärmeleitenden metallenen Wechselblock beispielsweise Seriennummern, Justagewerte von Temperatursensoren, maximalen Mischfrequenzen und blockspezifische Regelparameter für die Temperierung, die sich im Wechselblock befinden. Blockspezifische Regelparameter sind sinnvoll, um trotz unterschiedlicher Blockmassen ein optimales Einschwingverhalten (keine Überschwingen oder zu niedrige Temperierrampen) zu erhalten. Seriennummern können vom Basisgerät ausgelesen werden und ermöglichen somit die eindeutige Protokollierung des Versuchs. Für eine Kondensatvermeidungshaube sind gerätetypische Informationen beispielsweise Seriennummern, Justagewerte von Temperatursensoren und Regelparameter für die Temperierung. Die auf dem Peripheriegerät im Speichermedium hinterlegten gerätetypischen Informationen, z.B. der Justagewert eines Temperatursensors werden beim erstmaligen Aufsetzten des Peripheriegeräts auf das Basisgerät als Signal über das sich selbsttätig ausbildende Kopplungspaar übertragen, so dass die erfindungsgemäße Vorrichtung ohne weitere Justagen im zusammengesetzten Zustand betriebsbereit ist. Im Herstellungsprozess entfallen somit sonst übliche Arbeitsschritte, insbesondere der sonst übliche thermische Abgleich im zusammengesetzten Zustand. Des Weiteren können beliebige, später neu entwickelte, Blöcke auf dem Grundgerät betrieben werden ohne weitere Anpassungen (wie z.B. Software-Update am Basisgerät) vornehmen zu müssen. Für den Anwender im Labor ist der schnelle Informationsaustausch durch Signalübertragung mittels des sich selbsttätig ausbildenden Kopplungspaares zwischen Peripheriegerät und Basisgerät ebenfalls vorteilhaft. Üblicherweise gibt es verschiedene Peripheriegeräte, insbesondere verschiedene Wechselblöcke für ein Basisgerät, die der Anwender alle vorrätig hat. Rein äußerlich sind diese Wechselblöcke nicht einfach unterscheidbar, obwohl sich diese nur für bestimmte Anwendungen eignen. Bei der erfindungsgemäßen Vorrichtung sind diese gerätetypische Informationen und / oder anwenderspezifische Parameter bezüglich bestimmter Anwendungen auf dem jeweiligen Gerät in einem Speichermedium, vorzugsweise einem integrierten Schaltkreis und besonders bevorzugt auf einem Speicherchips hinterlegt. Beim Aufsetzen des Peripheriegeräts auf dem Basisgerät erfolgt durch das sich selbsttätig ausbildende wieder lösbare Kopplungspaar die Signalübertragung vom Peripheriegerät auf das Basisgerät und der Anwender erhält ein visuelles oder akustisches Signal bezüglich des Peripheriegeräts. Über das Signal werden Informationen übertragen. So kann beispielsweise auf einem Display auf der Gerätebasis angezeigt werden, bzw. durch einen Lautsprecher auf der Gerätebasis angesagt werden, dass das Peripheriegerät sich nur für bestimmte Anwendungen eignet. Vorzugsweise hat die erfindungsgemäße Vorrichtung ein Display auf dem Informationen dem Anwender angezeigt werden. Beispiele für anwenderspezifische Parameter die im Speichermedium hinterlegbar sind bestimmte Temperierbereiche, z.B. "Block nur bei Temperaturen von 15 °C - 50 °C nutzen, Substanzbeschränkungen wie z.B. "Block nur für biologische Substanzen nutzen", Drehzahlbeschränkungen, wie z.B. "Block nur bis zu einer maximalen Drehzahl von 2000 U/min nutzen". Des Weiteren sind icherheitsrelevante Grenzparameter wie die maximale Drehzahl in den unterschiedlichen Blöcken fest hinterlegt. Dies verhindert das Einstellen zu hoher Mischfrequenzen, die bei schwereren und/oder größeren Blöcken zu Unwuchten und Vibrationen des Basisgerätes führen; Unwuchten und Vibrationen führen dazu, dass sich die gesamte Vorrichtung von der Arbeitsfläche wegbewegen kann und somit zu die Proben, das Gerät und den Anwender gefährden Die erfindungsgemäße Vorrichtung ist durch diese Eigenschaft einfacher und betriebssicherer handhabbar, da der Anwender beim Aufsetzen des Peripheriegerät, insbesondere beim Aufsetzen eines Wechselblocks, Informationen bezüglich der Eignung des Peripheriegeräts für bestimmte Anwendungen erhält. So können fehlerhafte, möglicherweise Probe schädigende Anwendungen bzw. das Gerät (Basisgerät oder Peripheriegerät) schädigende Anwendungen vermieden werden.

Aus dem oben Gesagten ergibt sich insbesondere für das Peripheriegerät der Vorteil, dass es langlebiger wird, da fehlerhafte Anwendungen vermieden werden.

Die Erfindung betrifft somit:
1. eine Vorrichtung zum Temperieren von Laborgefäßen mit
   - mindestens einer Gefäßaufnahme zur Aufnahme der Laborgefäße
   - mindestens einem abnehmbar ausgestalteten Peripheriegerät und mit
   - einem Basisgerät, das eine Temperiervorrichtung und eine Halterung zum Aufsetzen des mindestens einen abnehmbaren Peripheriegeräts in einer definierten Position hat, dadurch gekennzeichnet, dass das Basisgerät und das mindestens eine Peripheriegerät jeweils mindestens ein Kopplungselement aufweisen, die beim Aufsetzen des Peripheriegeräts auf das Basisgerät in der definierten Position mindestens ein lösbares Kopplungspaar bilden, durch das elektrische Leistung und/oder mindestens ein Signal übertragbar ist, wobei die Vorrichtung einem Anwender ein visuelles oder akustisches Signal bezüglich des Peripheriegeräts gibt;
2. das Peripheriegerät zum Einsatz in dieser Vorrichtung; und
3. eine Verwendung der Vorrichtung bzw. des Peripheriegeräts für biologische, biochemische, molekularbiologische und/oder chemische Anwendungen im Labor.

Bei der vorliegenden Erfindung werden nachstehende Begriffe wie folgt definiert:

**"Temperieren":** im Sinne dieser Erfindung beschreibt die aktive Veränderung der Temperatur eines Objektes oder einer Flüssigkeit. Es beinhaltet sowohl das Heizen als auch das Kühlen. Insbesondere beschreibt der Begriff "temperieren" das Einstellen auf einen Sollwert durch das geregelte Ändern der Temperatur in der Gefäßhaltevorrichtung, insbesondere in der Gefäßaufnahme und damit in der Probe.

**"Laborgefäße"** sind ein oder eine Vielzahl an im Labor üblichen Behältern zur Aufnahme von Proben. Bei den Proben handelt es sich um Substanzen, insbesondere von Flüssigkeiten wie Lösungen, Gemischen, Suspensionen, Dispersionen Blut, etc oder Feststoffen. Der Begriff bezieht sich insbesondere auf Behälter zur Aufnahme kleiner Volumina (Mikrovolumina) wie z.B. 0,1 ml, 0,2 ml, 0,5 ml, die üblicherweise unter dem Namen Eppendorf-Gefäße zusammengefasst werden. Des Weiteren fallen unter diesen Begriff auch solche Gefäße mit größeren Aufnahmevolumen (z.B. 1 - 100 ml), die üblicherweise in einem Labor eingesetzt werden. Beispielsweise fallen unter diesen Begriff Falcon-Gefäße, Glasgefäße und Bechergläser. Ebenfalls fallen unter diesen Begriff auch Platten, in denen eine Vielzahl von Einzelgefäßen, insbesondere 12, 96, 384, 1536 Einzelgefäße, zusammengefasst sind wie Microtiterplatten (MTP), Deep Well Platten (DWP), PCR-Platten oder Zellkulturplatten. Insbesondere sind Laborgefäße im Sinne dieser Erfindung die oben genannten Laborgefäße, die mit einer Probe befüllt sind.

**"Gefäßaufnahme"** beschreibt eine Vertiefung bzw, Aussparung in einer Gefäßhaltevorrichtung (Aufnahmevorrichtung), die üblicherweise als viereckiger Block ausgestaltet ist und daher auch als Gefäßblock beschrieben wird. Die Vertiefung ist so ausgestaltet, dass ein Laborgefäß aufgenommen werden kann; sie ist so dimensioniert, dass das Laborgefäß den Boden und die Seitenwände der Gefäßaufnahme berührt und so ein wärmeleitender Kontakt zwischen Gefäßaufnahme und Laborgefäß entstehen kann. Ein Gefäßblock kann eine Gefäßaufnahme oder eine Vielzahl an Gefäßaufnahmen aufweisen. Der Gefäßblock ist vorzugsweise aus einem gut wärmeleitfähigen Material, d.h λ ist etwa ≥ 200 hergestellt. Der Gefäßblock selber steht in wärmeleitfähigen Kontakt mit dem einer Temperiervorrichtung. Der Gefäßblock kann permament installiert sein (nicht vorgesehen vom Anwender abgenommen zu werden), oder komplett abnehmbar ausgestaltet sein (vom Anwender abnehmbar). Vorzugsweise ist der Gefäßblock ein sogenannter Wechselblock, der komplett abnehmbar ist. Wenn die erfindungsgemäße Vorrichtung zum Temperieren als eine unbewegte Vorrichtung, d.h. als reines Thermostat ausgestaltet ist, wird der Gefäßblock nicht bewegt. Ist erfindungsgemäße Vorrichtung zum Temperieren als Mischer (temperierter Mischer) ausgestaltet, wird der Gefäßblock über den Antrieb in eine Mischbewegung versetzt.

**"Wechselblock"** beschreibt eine besondere Ausgestaltung einer Gefäßhaltevorrichtung (Gefäßblock). Der Gefäßblock ist als abnehmbares Peripheriegerät ausgestaltet. Wechselblöcke bestehen üblicherweise im Wesentlichen aus gut wärmeleitfähigen Werkstoffen wie Metallen, insbesondere aus Aluminium oder Silber, wobei der Wechselblock massiv aufgebaut sein oder zwecks Gewichtserleichterung eine erodierte Struktur aufweisen kann. Ein Wechselblock hat auf seiner Oberseite die Gefäßaufnahme/n. An seiner Unterseite ist er bis auf die Randbereiche, die der Befestigung auf dem Basisgerät dienen, flach ausgestaltet. Dies sichert einen optimalen großflächigen wärmeleitenden Kontakt mit der temperierten Kontaktseite des Basisgeräts. Die Randbereiche des Wechselblockes dienen der Befestigung des Wechselblockes auf der Halterung des Basisgeräts. Die Halterung des Basisgeräts und die Seitenbereiche des Wechselblockes können formschlüssig und/oder kraftschlüssig miteinander in Wechselwirkung treten. Beispielsweise können hinterschneidende Elemente, Federelemente oder Schrauben der Befestigung dienen. Allen Befestigungsarten ist gemein, dass sie sich einfach von dem Anwender lösen lassen. So ist es dem Anwender möglich einen Wechselblock vom Basisgerät abzunehmen und einen anderen Wechselblock wieder aufzusetzen. Die verschiedenen Wechselblöcke unterscheiden sich beispielsweise in der Art und/oder Anzahl ihrer Gefäßaufnahmen. Ein Wechselblock ist eine Ausführungsform eines abnehmbar ausgestalteten Peripheriegeräts. Wenn die erfindungsgemäße Vorrichtung zum Temperieren als eine unbewegte Vorrichtung, d.h. als reines Thermostat ausgestaltet ist, wird der Wechselblock nicht bewegt. Ist die erfindungsgemäße Vorrichtung zum Temperieren als Mischer (temperierter Mischer) ausgestaltet, wird der Wechselblock durch den Antrieb in eine Mischbewegung versetzt.

**"Abnehmbar ausgestaltetes Peripheriegerät"** bezeichnet einen Teil der erfindungsgemäßen Gesamtvorrichtung (Vorrichtung zu Temperieren), der sich durch seine komplette Trennbarkeit vom Basisgerät auszeichnet. Das Peripheriegerät ist auf der Oberseite des Basisgeräts angeordnet. Das Peripheriegerät besitzt elektrische Energie benötigende Elemente wie Sensoren, einen integrierten Schaltkreis (integrated circuit = IC) und/oder ein Heizelement, beispielsweise eine Heizfolie. Sensoren und Schaltkreis werden auch unter dem Begriff Sensorik zusammengefasst. Insbesondere besitzt es wenigstens einen Temperatursensor und wenigstens einen Speicherchip, insbesondere einen EEPROM. Die Sensorik eines Peripheriegeräts benötigt eine elektrische Leistung zwischen 0,1 uns 10 Watt. Elektrische Verbraucher, wie beispielsweise eine Heizfolie benötigen eine Leistung zwischen 50 und 500 Watt. Das elektrische Energie benötigende Peripheriegerät ist kabellos mit dem Basisgerät verbindbar. Das Peripheriegerät weist mindestens ein Kopplungselement auf, das mit einem Gegenstück in der Gerätebasis ein lösbares Kopplungspaar bildet, durch das elektrische Leistung und/oder ein Signal übertragbar ist. Vorzugsweise handelt es sich bei dem abnehmbar ausgestalteten Peripheriegerät um einen Wechselblock und/oder eine Kondensatvermeidungshaube. Die Gesamtvorrichtung kann mit nur einem abnehmbar ausgestalteten Peripheriegerät ausgestattet sein. Folgende Beispiele fallen unter diese Ausführungsform: 1. Erfindungsgemäße Vorrichtung mit einer Gefäßaufnahme in einem permanent installierten Gefäßblock und einer Kondensatvermeidungshaube als Peripheriegerät, wobei der Gefäßblock fest mit dem Basisgerät verbunden ist; 2. Erfindungsgemäße Vorrichtung mit einer Gefäßaufnahme in einem Wechselblock. Die Gesamtvorrichtung kann auch mit einer Vielzahl an abnehmbaren ausgestalteten Peripheriegeräten ausgestattet sein, insbesondere mit zwei Peripheriegeräten. Folgende Beispiele fallen unter diese Ausführungsform: 1. Erfindungsgemäße Vorrichtung mit einer Gefäßaufnahme in einem Wechselblock als erstes Peripheriegerät und einer Kondensatvermeidungshaube als zweites Peripheriegerät; 2. Erfindungsgemäße Vorrichtung mit einer Gefäßaufnahme in einem ersten Wechselblock und einer Gefäßaufnahme in einem zweiten Wechselblock. Die Gesamtvorrichtung kann auch mit drei abnehmbar ausgestalteten Peripheriegeräten ausgestattet sein. Folgende Beispiele fallen unter diese Ausführungsform: Erfindungsgemäße Vorrichtung mit einer Gefäßaufnahme in einem ersten Wechselblock und einer Gefäßaufnahme in einem zweiten Wechselblock und einer beide Wechselblöcke abdeckende Kondensatvermeidungshaube als drittem Peripheriegerät. Die Gesamtvorrichtung kann auch mit vier abnehmbar ausgestalteten Peripheriegeräten ausgestattet sein. Folgende Beispiele fallen unter diese Ausführungsform: Erfindungsgemäße Vorrichtung mit einer Gefäßaufnahme in einem ersten Wechselblock und einer Gefäßaufnahme in einem zweiten Wechselblock und jeweils einer separaten, jeden einzelnen Wechselblock abdeckenden Kondensatvermeidungshaube als drittem und viertem Peripheriegerät. Ist die erfindungsgemäße Gesamtvorrichtung als beheizter Mischer ausgestaltet, wird das die Gefäßaufnahme aufweisende Peripheriegerät ebenfalls in eine Mischbewegung versetzt. Ist das Peripheriegerät eine Kondensatvermeidungshaube wird diese nicht in eine Mischbewegung versetzt, d.h. die Kondensatvermeidungshaube bleibt während des Mischvorgangs unbewegt. Dies ist vorteilhaft, da es die Lebensdauer der empfindlichen Sensoren verlängert.

**"Basisgerät"** bezeichnet den Teil der Gesamtvorrichtung, der für die komplette elektrische Energieversorgung der Gesamtvorrichtung verantwortlich ist und der die Bedieneroberfläche und Steuerungselemente umfasst. Wenn die erfindungsgemäße Gesamtvorrichtung zum Temperieren ein Mischer (temperierter Mischer) ist, befindet sich im Basisgerät ebenfalls der Antrieb. Das Basisgerät ist an eine externe elektrische Energiequelle angeschlossen oder weist selber eine Energiequelle auf. Auf der Oberseite des Basisgeräts befinden sich eine Temperiervorrichtung sowie eine Halterung zum Aufsetzen und Befestigen des Peripheriegeräts in einer definierten Position. Die Temperiervorrichtung dient der mittelbaren Temperierung der Laborgefäße, die sich in einer Gefäßaufnahme in einem Gefäßblock befinden. Der Gefäßblock steht im unmittelbaren Kontakt mit der Temperiervorrichtung auf der Oberseite des Basisgeräts, so dass die Temperiervorrichtung unmittelbar den Gefäßblock auf die gewünschte Temperatur einstellt.

**"Halterung"** bezeichnet ein oder mehrere Befestigungselemente auf dem Basisgerät, die der lösbaren Befestigung des Peripheriegeräts auf dem Basisgerät dienen. Die Halterung ist so ausgestaltet, dass mindestens ein Peripheriegerät aufgesetzt werden kann. Wenn die erfindungsgemäße Gesamtvorrichtung als Mischer (beheizter Mischer) ausgestaltet ist, der sowohl einen Wechselblock wie auch eine Kondensatvermeidungshaube aufweist, liegt ein erstes Befestigungselement an einem bewegten Teil des Basisgeräts. Auf dieses erste Befestigungselement wird das die Gefäßaufnahme aufweisende Peripheriegerät, insbesondere ein Wechselblock, aufgesetzt, um den Wechselblock mit Gefäßaufnahme ebenfalls in eine Mischbewegung zu versetzen. Ein zweites Befestigungselement liegt in einem unbewegten Bereich des Basisgeräts, d.h. einem Bereich welcher nicht vom Antrieb bewegt wird. Auf dieses zweite Befestigungselement wird die Kondensatvermeidungshaube aufgesetzt, die nicht an der Mischbewegung teilnimmt. "Definierte Position" oder der synonyme Begriff "bestimmte Position" bezeichnen die einzige mögliche korrekte Positionierung des Peripheriegeräts auf dem Basisgerät. Die Positionierung ist korrekt, sofern die jeweiligen Kopplungselemente auf Peripheriegerät und Basisgerät ein funktionstüchtiges wiederlösbares Kopplungspaar bilden, über das mindestens ein Signal und/oder elektrische Leistung übertragbar ist. Das Aufsetzten in der definierten Position ist erkennbar durch die unmittelbar eintretende Signalübertragung, die die Identifikation des Peripheriegeräts durch das Basisgerät erlaubt und die dem Anwender auf einem Display am Basisgerät angezeigt wird.

**"Kopplungselement"** beschreibt als Oberbegriff verschiedene technische Elemente, die selbsttätig sowohl eine Signal wie auch eine elektrische Energieübertragung ermöglichen zwischen Peripheriegerät und Basisgerät. Insbesondere ist ein Kopplungselement ein optisches Kopplungselement. Ein optisches Kopplungselement wird auch als Optokoppler bezeichnet und ermöglicht die Signal und Energieübertragung auf optischen Weg. Optokoppler sind insbesondere eine LEDs, eine Infrarot LED und als Gegenstück ein Fotroempfänger, eine Fotodiode, ein Fototransistor oder ein lichtabhängiger Widerstand (Light Dependent Resistor; LDR). Die erfindungsgemäße Gesamtvorrichtung bzw. das erfindungsgemäßen Peripheriegerät haben vorzugsweise Optokoppler zu Signalübertragung.

Unter dem Begriff "Kopplungselement" fällt ebenfalls ein induktives Kopplungselement insbesondere eine Spule. Die beiden zusammenwirkenden Spulen in Basisgerät (Primärspule) und Peripheriegerät (Sekundärspule) wirken als lose gekoppelter Transformator. Eine Spule hat einen E Ferritkern. Zwischen den beiden Spulen in Basisgerät (Primärspule) und Peripheriegerät (Sekundärspule) liegt ein Luftspalt von ca. 2 mm. Der zu überbrückende Luftspalt hat großen Einfluss auf die Dimensionen der Ferrit Schenkelabstände. Bei einem sehr kleinen Luftspalt ist ebenfalls der Abstand der Schenkel klein, beispielsweise bei einem 4 mm Kern (Topfkern) reicht ein 1mm Schenkelabstand aus um eine Distanz von ca. 0,5 bis 1 mm zu überbrücken. Bei einem größeren Abstand muss auch der Schenkelabstand größer gewählt sein (z.B. ca. 3-4mm). Nur so ist sicher gestellt, dass sich die magnetischen Feldlinien weiter in den Raum ausbreiten können und so eine ausreichende magnetische Wechselwirkung in der sekundären Ferrit-Spulen Einheit erfolgt um auch einen brauchbaren Wirkungsgrad der Energieübertragung zu erhalten.

Unter den Begriff "Kopplungselement" fällt ebenfalls ein kapazitives Kopplungselement. Ein kapazitives Kopplungselement besteht aus einem Kondensator. Unter den Begriff "Kopplungselement" fällt ebenfalls ein galvanisches Kopplungselement. Ein galvanisches Kopplungselement im Sinne dieser Erfindung ist ein verfederter Kontakt (Federkontakt). Über den jeweiligen Federkontakt im Basisgerät und im Peripheriegerät stellt sich selbsttätig eine elektrisch leitfähige Verbindung (elektrische Leitungsverbindung) ein.

**"Lösbares Kopplungspaar"** bezeichnet den Zusammenschluss von je einem Kopplungselement (erstes Kopplungselement) im Basisgerät mit seinem Gegenstück (zweites Kopplungselement) im Peripheriegerät, der sich selbsttätig einstellt, wenn das Peripheriegerät in der definierten Position auf das Basisgerät aufgesetzt wird. Bei Abnahme des Peripheriegeräts von dem Basisgerät werden die Kopplungselemente wieder räumlich getrennt und die Kopplung wird aufgehoben (lösbar). Der Begriff "Zusammenschluss" ist in diesem Kontext ein kontaktierender Zusammenschluss, wenn es sich bei dem Kopplungselement um ein galvanisches Kopplungselement handelt. Bei allen anderen Kopplungselementen (optisch, induktiv, kapazitiv), die ein Kopplungspaar bilden, ist der Zusammenschluss kontaktfrei (berührungslos). Die Kopplungselemente befinden sich lediglich in räumlicher Nähe und sind durch einen Luftspalt getrennt. Vorzugsweise ist der Luftspalt ca 2 mm breit.

**"Übertragbarkeit elektrischer Leistung"** im Sinne dieser Anmeldung bedeutet, dass in eine Übertragungsstrecke elektrische Leistung eingekoppelt wird und das am Ende der Übertragungsstrecke elektrische Leistung wieder zur Verfügung steht. Zwischenzeitlich, z.B. zwischen Basisgerät und Peripheriegerät kann sie in beliebige andere Energieformen (z.B. magnetische oder elektrische Felder, Licht) gewandelt und später wieder zurück gewandelt werden.

"Signal" im Sine dieser Erfindung ist eine Information, die von einem Sensor und/ oder einem IC (insbesondere einem EEPROM) und /oder einer Steuerungseinheit, zu einem Empfänger transportiert wird. Vorzugsweise handelt es sich bei dem Signal um einen am Peripheriegerät detektierten Messwert oder Zustand.

**"Galvanisch voneinander getrennt"** beschreibt das Fehlen einer leitfähigen Verbindung. Vorzugsweise sorgt ein Luftspalt für das Fehlen der leitfähigen Verbindung. Insbesondere bevorzugt ist ein Luftspalt von 2mm Breite. In den Ausführungsformen der erfindungsgemäßen Vorrichtung mit optischen Kopplungselementen, induktiven und/oder kapazitiven Kopplungselementen sind das Basisgerät und Peripheriegerät auch im zusammengesetzten, d.h. betriebsbereiten Zustand galvanisch voneinander getrennt.

**"Integrierter Schaltkreis (IC)":** ist ein elektronisches Bauelement mit Verschaltung. Insbesondere ist dies ein Mikrochip, vorzugsweise ein EEPROM.

**"Galvanisches Kontaktelement"** ist im Sinne dieser Erfindung ein aus leitfähigem Material bestehendes Element, durch das elektrischer Strom fließt. Ein galvanisches Kontaktelement dient insbesondere der elektrischen Leistungsübertragung vom Basisgerät zum Peripheriegerät. Insbesondere weisen das Basisgerät und die Kondensatvermeidungshaube je ein galvanisches Kontaktelement auf, die beim Aufsetzten der Kondensatvermeidungshaube auf dem Basisgerät zusammen einen lösbaren leitfähigen Kontakt formen. Bei einer erfindungsgemäßen Ausgestaltung ist das galvanische Kontaktelement am Basisgerät ein Positionierdorn (auch Positionierdom oder Dom genannt) der eine elektrisch leitende Schraube, die an eine Stromquelle angeschlossen ist, an der Oberseite des Basisgeräts befestigt. Am Peripheriegerät ist das galvanische Kontaktelement eine Ringfeder, die in einer Nut einer Buchse sitzt. Wird beim Aufsetzten der Kondensatvermeidungshaube auf dem Basisgerät der Dorn bzw. Dom des Basisgeräts in die Buchse der Kondensatvermeidungshaube eingeführt, so wird ein elektrisch leitfähiger Kontakt hergestellt. Von der Buchse mit Ringfeder an der Kondensatvermeidungshaube wird der Strom über ein Kabel weiterverteilt zu einer Heizfolie oder einem anderen Heizelement.

**"Elektrischer Verbraucher"** im Sinne dieser Erfindung sind elektronische Bauteile, die zwischen 50 und 500 Watt Leistung verbrauchen. Insbesondere solche elektronischen Bauteile, die zwischen 50 und 300 Watt Leistung verbrauchen und besonders bevorzugt solche, die zwischen 100 und 200 Watt Leistung verbrauchen. Eine erfindungsgemäße Ausführungsform eines elektrischen Verbrauchers ist ein Heizelement, insbesondere eine Heizfolie, in der Kondensatvermeidungshaube. Auf dieses Heizelement werden 160 Watt Leistung eingebracht.

**"Kondensatvermeidungshaube"** im Sinne dieser Erfindung ist eine Haube, die gemeinsam mit den Wandungen des Basisgeräts und / oder des Gefäßblocks einen Raum um die Gefäßhaltevorichtung in der sich die Laborgefäße befinden, umschließt. Die Haube mit oberer Decke und vier von der oberen Decke heruntergezogenen Seitenwänden umfasst thermisch isolierende Materialien in den Wänden und der Decke. Des Weiteren hat die Haube an ihrer Decke ein Heizelement, insbesondere eine Heizfolie. Die Haube wirkt thermisch isolierend. Die Haube umfasst des Weiteren wenigstens einen Temperatursensor und/oder wenigstens einen IC, insbesondere ein EEPROM. Die Kondensatvermeidungshaube ist eine erfindungsgemäße Ausführungsform des Peripheriegeräts und hat mindestens ein Kopplungselement, das beim Aufsetzten der Haube auf das Basisgerät ein lösbares Kopplungspaar mit seinem Gegenstück im Basisgerät bildet. Die erfindungsgemäße Haube bleibt bei allen Ausführungsformen unbewegt, d.h. sie nimmt nicht an der Mischbewegung teil.

**"Formschlüssig"** im Sinne dieser Erfindung ist eine Verbindung, wenn die Kraftübertragung über Formelemente erfolgt. Die geometrische Gestalt der Bauteile unterbindet ihre Trennbarkeit.

**"Kraftschlüssig"** im Sinne dieser Erfindung ist eine Verbindung, wenn durch Vorspannkräfte oder Normalkräfte auf die Berührflächen Reibkräfte erzeugt werden. Diese Reibkräfte verhindern die Trennung der Bauteile.

"Verbindungselemente" im Sinne dieser Erfindung dienen allein dem mechanischen Zusammenschluss.

Die erfindungsgemäße Vorrichtung hat mindestens eine Gefäßaufnahme zur Aufnahme der Laborgefäße, mindestens ein abnehmbares Peripheriegerät sowie mindestens eine Halterung, die zum Aufnehmen des mindestens einen abnehmbaren Peripheriegeräts in einer bestimmten Position auf dem Basisgerät eingerichtet ist. Die Temperiervorrichtung bestehend aus wenigstens einem Temperierelement (z.B. resistive oder keramische Heizelemente oder Peltier-Elemente) ist vorzugsweise unterhalb der mindestens einen Gefäßaufnahme angeordnet.

Das Basisgerät und das mindestens eine Peripheriegerät weisen erfindungsgemäß jeweils mindestens ein Kopplungselement auf, die paarweise, als mindestens ein lösbares Kopplungspaar zusammen wirken, durch das elektrische Leistung und/oder mindestens ein Signal übertragbar ist, wenn sich das Peripheriegerät in der bestimmten Position (definierten Position) auf dem Basisgerät befindet. Diese mindestens eine Kopplung funktioniert vorzugsweise ohne elektrisch leitenden Werkstoffkontakt, also trotz galvanischer Trennung, zum Beispiel optisch und/oder induktiv und/oder kapazitiv. Von dem mindestens einen erfindungsgemäßen Kopplungspaar kann aber mindestens eines auch galvanisch leitend funktionieren. Die übertragenen Signale sind vorzugsweise Licht- und/oder elektrische Spannungssignale. Bei mehreren erfindungsgemäßen Kopplungspaaren lassen sich die erwähnten Wirkprinzipien beliebig kombinieren. Nicht galvanische Kopplungspaare haben den Vorteil, dass verschüttete Probenflüssigkeit nicht in Kontakt mit elektrisch leitenden Bauteilen kommen kann. So werden potentielle Kurzschlüsse und Korrosionsschäden vermieden.

Mindestens ein Kopplungselement ist vorzugsweise eine LED, insbesondere eine Infrarot-LED, die mit mindestens einem Kopplungselement in Gestalt einer Fotodiode, eines Fotoempfängers, eines Fototransistors oder eines lichtabhängigen Widerstandes (Light Dependent Resistor /LDR) als optoelektronische Kopplung zusammenwirkt. Diese Art Kopplungen funktionieren unidirektional. Je nach Übertragungsrichtung sind die Kopplungselemente folglich entweder im Basis- oder Peripheriegerät angeordnet. Diese Art der Kopplung wird bevorzugt zur Signalübertragung eingesetzt.

Mindestens zwei Kopplungselemente können aber auch Spulen (oder Kondensatoren) sein, die miteinander als Kopplung induktiv zusammenwirken (oder als Kondensatoren kapazitiv), oder verfederte galvanisch leitende Kontakte. Durch ein einzelnes Paar solcher Kopplungselemente können in mehreren Kanälen Signal und/oder Leistung elektrisch übertragen werden. Durch den Einsatz einer elektrischen Signalmodulationsvorrichtung können über einen bidirektionalen Kanal (z.B. elektromagnetische Kopplung oder einer elektrischen Leitungsverbindung mit mindestens einem der Kopplungselemente verschiedene Signale, also "mehrere Kanäle" auf ein elektrisches Grundsignal "aufmoduliert" übertragen werden. Diese Art Kopplungen können (aufmoduliert oder nicht) unidirektional oder bidirektional eingesetzt werden. Vorzugsweise werden Spulen oder galvanisch leitende Kontakte zur reinen elektrischen Leistungsübertragung eingesetzt, d.h. nicht zur Signalübertragung.

Peripheriegeräte können erfindungsgemäß zum Beispiel Wechselblöcke oder Kondensatvermeidungshauben sein, insbesondere der eingangs zum Stand der Technik beschriebenen Art und mit den dort beschriebenen Merkmalen. Die erfindungsgemäße Vorrichtung hat in ihrer Ausführung als Mischvorrichtung einen im Basisgerät angeordneten Antrieb (Exzenterantrieb) der durch einen Elektromotor angetrieben wird. Der Exzenterantrieb ist mit einer Platte, die im Fachjargon auch als "Tisch" bezeichnet wird, verbunden. Die Platte dient als Aufnahmevorrichtung für einen Gefäßblock. Auf der Platte befindet sich daher insbesondere die Halterung zum Aufsetzten eines Wechselblockes, eines der möglichen Peripheriegeräte. Der Antrieb setzt somit die Platte inklusive Halterung für Wechselblock und Wechselblock in eine Mischbewegung. Für ein zweites mögliches Peripheriegerät, insbesondere eine Kondensatvermeidungshaube (Haube) befindet sich die Halterung nicht auf der vom Antrieb in Bewegung versetzten Platte, sondern auf einem unbewegten Teil der erfindungsgemäßen Vorrichtung.

Weil diese Wechselblöcke meistens so aufgebaut sind, dass Einzelgefäße von oben dort hinein gesteckt werden, ist für die Vorrichtung eine kreisförmig translatorisch wiederkehrende Mischbewegung bevorzugt, die im wesentlichen in einer horizontalen Ebene abläuft und auch als Orbitalbewegung bezeichnet wird. Zu diesem Zweck ist vorzugsweise ein Exzenterantrieb, der bevorzugt durch einen Elektromotor angetrieben wird, dafür zuständig, einen "Tisch" (eine Aufnahmevorrichtung, auf der ein Wechselblock aufsetzbar ist) in diese kreisförmige Bewegung zu versetzen. Die Vorrichtung wird dann vorzugsweise mit einer Drehfrequenz von 200 U/min bis 3.000 U/min angetrieben, es sind aber auch Drehfrequenzen von 100 U/min bis 10.000 U/min möglich. Die Frequenz ist vorzugsweise einstellbar.

Die mindestens eine Kopplung dient vorzugsweise dazu, mindestens einen elektrischen Verbraucher, zum Beispiel eine Heizung oder Kühlung, aber auch zum Beispiel mindestens einen Sensor und/oder mindestens eine integrierte Schaltung (IC) durch die mindestens eine Kopplung des Peripheriegeräts mit Energie zu versorgen und/oder das Peripheriegerät mit dem Basisgerät in eine Signalverbindung zu bringen. Für den Fall der Stromversorgung ist die induktive Kopplung über ein Spulenpaar bevorzugt, und/oder das Basisgerät und das mindestens eine Peripheriegerät weisen jeweils mindestens zwei (ein) (zusätzliches) galvanisches Kontaktelement auf, die beim Aufsetzen des Peripheriegeräts auf das Basisgerät in der definierten Position mindestens einen lösbaren leitfähigen Doppelkontakt formen, durch den elektrische Leistung vom Basisgerät zu einem elektrischer Verbraucher im Peripheriegerät übertragbar ist.

Mit der erfindungsgemäßen Vorrichtung sind Signale vom Basisgerät zur Peripherie und umgekehrt vom Peripheriegerät zum Basisgerät sendbar. Vorteilhaft können zum Beispiel Betriebsrestriktionen für Peripheriegeräte in den Peripheriegeräten selbst (zum Beispiel in EEPROMs) abgespeichert sein wie etwa maximale Drehgeschwindigkeiten oder zu vermeidende Drehgeschwindigkeiten (zu vemeiden weil für die bestehende Masse eines jeweiligen Peripheriegerätes Resonanzfrequenzen drohen) und/oder Justagedaten für Temperierung; Gegenüber den vorbekannten Mischern, die mit am Gefäßblock eingeschobenen Temperatursensoren, die in einem "Dom" am Basisgerät befestigt waren, hat dies folgende Vorteile: Die im Peripheriegerät, insbesondere im Wechselblock fest installierten Sensorik ist weniger störanfällig und erlaubt die genauere Signalübertragung da er nur einer Baugruppe angehört; insbesondere ist die fest im Peripheriegerät installierte Sensorik dichter an der Probe - was besonders bei großen Blöcken wichtig ist - und es ist keine Luftschicht zwischen Sensorik und Peripheriegerät; dies erlaubt eine genauere Temperaturerfassung und damit genauere und schnellere Regelung. Die fest im Peripheriegerät installierte Sensorik kann sich nicht bewegen und/oder verrutschen; die fest im Peripheriegerät installierte Sensorik ist einfacher im Zusammenbau; die fest im Peripheriegerät installierte Sensorik ist ein zukunftsoffenes System für neu zu entwickelnde Peripheriegeräte, beispielsweise Wechselblöcke oder anderen Ausführungen der Kondensatvermeidungshaube mit Zusatznutzen (Beleuchtung).

Ein vorzugsweise in der Haube und/oder dem Wechselblock enthaltener Temperatursensor sowie mögliche Speicherbausteine zur Identifizierung der Haube und/oder des Wechselblocks können induktiv, auf die Energieversorgung aufmoduliert oder optisch angebunden werden. Das Detektieren eines Peripheriegerätes kann auch über einen Magnet (bevorzugt im Peripheriegerät) und einen magnetischen Sensor (Hallsensor, Feldplatte) erfolgen. So kann erfindungsgemäß das Versorgen der Kopplungselemente mit Energie und/oder Signalen vom Detektieren der Anwesenheit eines Peripheriegeräts (und/oder dessen Identifizierung) abhängig gemacht werden. Im Falle von induktiven Kopplungselementen hat die Abschaltung der Spule bei Abwesenheit eines Peripheriegeräts den Vorteil, dass sie nicht als "Störsender" andere elektronische Geräte im Umfeld beeinflussen kann. Elektrische Leistungen werden induktiv bevorzugt bei Frequenzen von 100-1000kHz, besonders bevorzugt bei Frequenzen von 250-500kHz übertragen. Diese Frequenzbereiche haben sich bei der Optimierung der Baugröße, des überbrückbaren Luftspaltes und des Wirkungsgrades als vorteilhaft erwiesen.

Die Aufnahmevorrichtung und das mindestens eine Peripheriegerät können jeweils mindestens ein Positionierelement, vorzugsweise in Gestalt eines Steckverbindungselements aufweisen, die in der bestimmten Position zusammen als Positionier-Steckkopplung wirken - aber auch zusätzlich als erfindungsgemäße Übertragungskopplung zum Beispiel, wenn erfindungsgemäß Kopplungselemente dort integriert sind. Magnetische, insbesondere ferromagnetische, Verbindungselemente, können die Steckkopplung (zusätzlich zum Beispiel zu der Kombination eines Kraftschlusses und Formschlusses eines zusätzlichen verfederten Rastmechanismus sowie zusätzlich zum Formschluss der Steckverbindung) in der bestimmten Position zusammen halten. Dies wird zum Beispiel der Anforderung gerecht, dass ein Wechselblock oder eine Kondensatvermeidungshaube sicher gehalten werden muss und bei Mischbewegung nicht wegfliegen darf. Gegenüber dem eingangs genannten Stand der Technik zur Festlegung von Wechselblöcken durch Verschraubung, sind Lösungen zu bevorzugen bei denen sich eine sichere Halteverbindung beim Aufsetzen des Wechselblockes analog zur elektrischen Leistungs- und Signalkopplung selbsttätig ausbildet. Dies könnte z.B. durch einen Rastmechanismus, ein Federelement, inbesondere ein Seitendruckstück geschehen.

Das Peripheriegerät und/oder das Basisgerät können eine Schiebeabdeckung aufweisen, die in eine Position verschieblich und mittels eines elastischen Elementes in diese Position vorgespannt ist. In der vorgespannten Position überdeckt die Schiebeabdeckung mindestens teilweise ein Kopplungselement. Dies dient insbesondere dem zusätzlichen Schutz des Kopplungselements. Ein Kopplungselement kann ohnehin recht einfach bündig und sogar hinter einer fugenlosen Gehäuseoberfläche integriert sein, so dass die Schiebeabdeckung dan einen zusätzlichen Schutz darstellt.

Das Peripheriegerät selbst, insbesondere in seiner Ausgestaltung als Wechselblock mit mindestens einem Kopplungselement und Sensorik sowie in seiner Ausgestaltung als Kondensatvermeidungshaube mit mindestens einem Kopplungselement und Sensorik, ist ebenfalls erfindungsgemäß. Des Weiteren ist auch die Verwendung des Peripheriegeräts und/oder der erfindungsgemäßen Gesamtvorrichtung erfindungsgemäß. Die soweit beschriebenen erfindungsgemäßen Merkmale der Peripheriegeräte gelten folglich sowohl für Peripheriegeräte als Element der Gesamtvorrichtung als auch für erfindungsgemäße Peripheriegeräte allein.

Weitere Vorteile und Merkmale der erfindungsgemäßen Vorrichtung und erfindungsgemäßer Peripheriegeräte werden mit Bezug auf die beigefügten Figuren beispielhaft beschrieben.
- **Figur 1**: zeigt eine räumliche Ansicht erfindungsgemäßer Kopplungen
- **Figur 2,**: zeigt eine räumliche Draufsicht auf ein erfindungsgemäßes Basisgerät,
- **Figur 3a und 3b**: zeigen eine räumliche Seitensicht eines erfindungsgemäßen Basisgeräts mit aufgesetztem und abgenommenem Peripheriegerät und der Kopplung aus Figur 2,
- **Figur 4a bis 4c**: zeigen eine Seitensicht, eine Draufsicht und eine räumliche Seitensicht einer Spule mit Kern als Element der Kopplung aus Figur 2,
- **Figur 5**: zeigt eine teilweise geschnittene räumliche Seitenansicht einer erfindungsgemäßen zusätzlichen Steckverbindung,

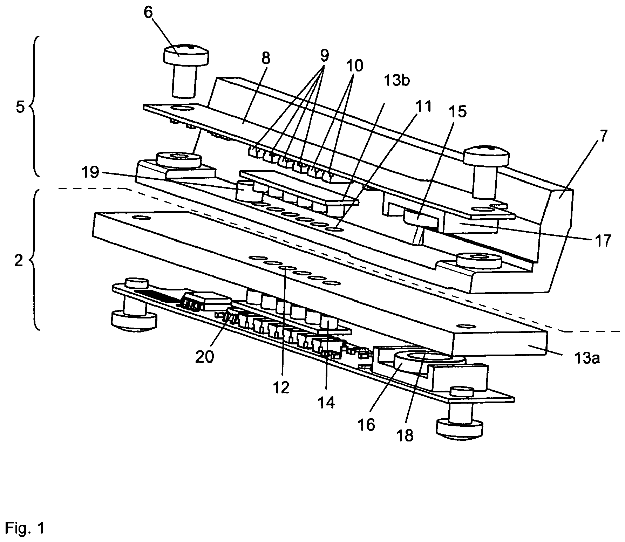

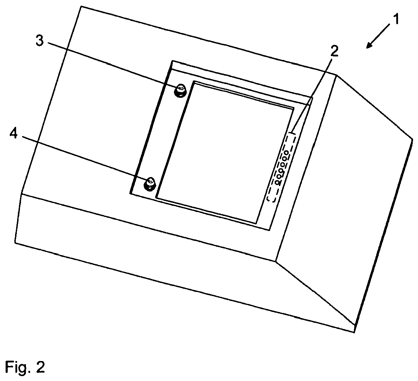

Figur 1 veranschaulicht den Funktionsumfang einer erfindungsgemäßen optisch induktiven Schnittstelle. Sie besteht aus einem Basisgerät-seitigen Teil 2 (siehe auch Figur 2) und einem Peripheriegeräte-seitigen Teil 5. Die Peripheriegeräte-seitige Baugruppe wird mittels Schrauben 6 auf einer Innenseite 7 des Peripheriegeräts, zum Beispiel der Innenschale einer Kondensatvermeidungshaube, befestigt (die Außenschale ist in dieser Abbildung nicht dargestellt). Eine Leiterplatte 8 beherbergt sechs optische Kanäle. Vier Kanäle übertragen Daten von der Kondensatvermeidungshaube an das Basisgerät. Dementsprechend finden sich auf der Leiterplatte vier Infrarot-LEDs 9. Zwei Kanäle übertragen Daten vom Basisgerät an die Kondensatvermeidungshaube. Hierfür befinden sich auf der Leiterplatte zwei Photoempfänger 10. Die optischen Bauteile stehen mit ihren komplementären Kopplungselementen im Basisgerät in optischer Verbindung über Durchbrüche 11, 12 in der Innenschale der Kondensatvermeidungshaube 7 und der Gehäuseoberseite13a des Basisgeräts. Als Schutz vor Verschmutzung und Umgebungslicht sind in den Durchbrüchen 11, 12 optische Filter 13b, 14 platziert.

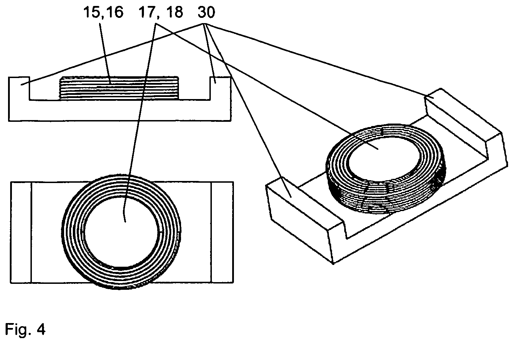

Die Stromversorgung für zwei in der Kondensatvermeidungshaube enthaltene Temperatursensoren und ein EEPROM (hier nicht dargestellt) sowie für die sechs optischen Kanäle wird über eine induktive Kopplung realisiert. Hierfür werden auf Kondensatvermeidungshauben und auf der Geräteseite jeweils eine Spule 15, 16 positioniert. Diese sind jeweils auf den zentralen Zapfen eines Halbschalenkerns 17, 18 gewickelt und weisen zum gerichteten Leiten der Magnetfeldlinien seitliche Stege 30 auf, deren Verlauf abschnittsweise im Wesentlichen dem Verlauf von Feldlinien des Magnetfeldes (nicht dargestellt) folgt, um die induktive Signalübermittlung insbesondere auch über einen Spaltabstand oder durch ein Gehäuse zu verbessern - geräteseitig 18 gut stilisiert zu erkennen und detailliert in Figur 4. Die Energieübertragung erfolgt nach dem Prinzip des lose gekoppelten Transformators.

Auf der Seite der Kondensatvermeidungshaube befindet sich zudem ein Magnet 19. Dieser wird geräteseitig detektiert über einen Hall-Sensor 20. Erst wenn die Kondensatvermeidungshaube auf dem Basisgerät in der bestimmten (bestimmungsgemäßen) Position platziert ist und der Hall-Sensor 20 den Magneten 19 erkennt, wird die Spule 16 bestromt. So werden die Verlustleistung und die elektromagnetische Störwirkung der induktiven Schnittstelle reduziert.

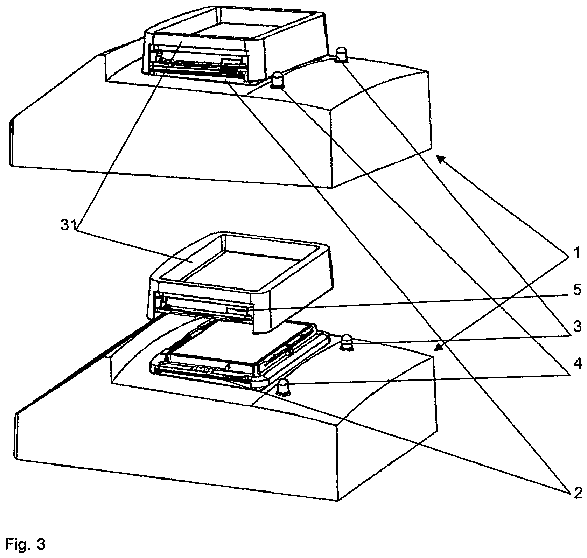

Der Einbau der Kopplungsbaugruppen 2 und 5 nach Figur 1 in ein Basisgerät 1 und ein Peripheriegerät 31 zeigt schematisch Figur 3.

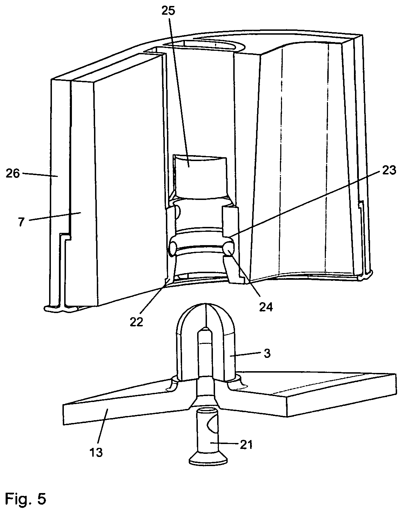

Figur 5 zeigt eine zusätzliche magnetisch elektrische Steckverbindung mit einem Positionierdorn oder Dom 3 (Figur 2). Eine baugleiche Schnittstelle wird auch über den zweiten Positionierdorn 4 realisiert. Der aus einem ferromagnetischem Metall hergestellte Positionierdorn 3 wird mittels einer elektrisch leitenden Schraube 21 an der Oberseite 13 des Basisgeräts 1 befestigt. Die Schraube 21 wird mit einer Stromquelle verbunden (hier nicht dargestellt).

In die Innenschale 7 der Kondensatvermeidungshaube ist eine metallische Buchse 22 eingepresst. Diese weist eine Innennut 23 auf, in die eine Ringfeder 24 eingesetzt ist. Wird die Kondensatvermeidungshaube auf das Basisgerät 1 aufgesetzt, so wird ein elektrischer Leitungskontakt vom Positionierdorn 3 über die Ringfeder 24 zur Buchse 22 hergestellt. Über ein Stromkabel (hier nicht dargestellt) wird diese dann mit einer Heizfolie (nicht dargestellt) in der Kondensatvermeidungshaube verbunden. Der Stromkreis wird zurück zum Basisgerät 1 geschlossen über die zweite Schnittstelle durch den Positionierdorn 4.

Neben der soweit beschriebenen Stromleitungsfunktion kommt der Steckverbindung nach Figur 5 eine Haltefunktion zu. Dafür ist in die Außenschale 26 der Kondensatvermeidungshaube ein Magnet 25 eingepresst. Dieser übt bei aufgesetzter Kondensatvermeidungshaube eine Magnetkraft auf den ferromagnetischen Positionierdorn 3 aus und sichert die Haube so zusätzlich auf dem Basisgerät 1.

## Patentansprüche

1. Vorrichtung zum Temperieren von Laborgefäßen mit
- mindestens einer Gefäßaufnahme zur Aufnahme der Laborgefäße
- mindestens einem abnehmbar ausgestalteten Peripheriegerät und mit
- einem Basisgerät, das eine Temperiervorrichtung und eine Halterung zum Aufsetzen des mindestens einen abnehmbaren Peripheriegeräts in einer definierten Position hat, **dadurch gekennzeichnet, dass** das Basisgerät und das mindestens eine Peripheriegerät jeweils mindestens ein Kopplungselement aufweisen, die beim Aufsetzen des Peripheriegeräts auf das Basisgerät in der definierten Position mindestens ein lösbares Kopplungspaar bilden, durch das elektrische Leistung und/oder mindestens ein Signal übertragbar ist, wobei die Vorrichtung einem Anwender ein visuelles oder akustisches Signal bezüglich des Peripheriegeräts gibt.

2. Vorrichtung gemäß Anspruch 1, **dadurch gekennzeichnet, dass** die jeweiligen Kopplungselemente des mindestens einen lösbaren Kopplungspaars galvanisch voneinander getrennt sind.

3. Vorrichtung gemäß Anspruch 2, **dadurch gekennzeichnet, dass** durch das mindestens je eine lösbare Kopplungspaar optisch und/oder induktiv und/oder kapazitiv elektrische Leistung und/oder oder mindestens ein Signal übertragbar sind.

4. Vorrichtung gemäß einem der Ansprüche 1 bis 3, **dadurch gekennzeichnet, dass** im Basisgerät und im Peripheriegerät jeweils mindestens ein Kopplungselement eine Spule ist, die beide zusammen in der definierten Position das mindestens eine lösbare Kopplungspaar bilden.

5. Vorrichtung gemäß Anspruch 4, **dadurch gekennzeichnet, dass** nur dann ein elektrischer Strom durch die Spule im Basisgerät fließt, wenn ein im Basisgerät vorhandener Sensor das Peripheriegerät detektiert.

6. Vorrichtung gemäß Anspruch 5, **dadurch gekennzeichnet dass** über die Spule im Basisgerät zu der Spule im Peripheriegerät die elektrische Leistung mittels Frequenzen im Bereich von 250 bis 500 kHz übertragen wird.

7. Vorrichtung gemäß Anspruch 2 oder 3 **dadurch gekennzeichnet, dass** im Basisgerät das mindestens eine Kopplungselement eine LED, insbesondere eine Inf rarot-LED, und im Peripheriegerät das mindestens eine Kopplungselement eine Fotoempfänger, Fotodiode, ein Fototransistor oder ein lichtabhängiger Widerstand (Light Dependent Resistor/ LDR) ist oder umgekehrt.

8. Vorrichtung gemäß einem der Ansprüche 1 bis 7, **dadurch gekennzeichnet, dass** das Peripheriegerät mindestens einen Sensor und/oder mindestens einen integrierten Schaltkreis (IC) aufweist, wobei durch das mindestens eine Kopplungspaar ein Signal von dem Sensor und/oder dem IC in das Basisgerät übertragbar ist und/oder vom Basisgerät in das Peripheriegerät.

9. Vorrichtung nach einem Ansprüche 2 bis 8, **dadurch gekennzeichnet, dass** das Basisgerät und das mindestens eine Peripheriegerät jeweils mindestens ein galvanisches Kontaktelement aufweisen, die beim Aufsetzen des Peripheriegeräts auf das Basisgerät in der definierten Position mindestens einen lösbaren leitfähigen Kontakt formen, durch den elektrische Leistung vom Basisgerät zu einem elektrischer Verbraucher im Peripheriegerät übertragbar ist.

10. Vorrichtung nach einem der Ansprüche 1 bis 9, **dadurch gekennzeichnet, dass** die mindestens eine Gefäßaufnahme eine Vertiefung oder Aussparung in einem permanent installierten Gefäßblock oder in einem komplett abnehmbar ausgestaltet Gefäßblock ist.

11. Vorrichtung nach einem der Ansprüche 1 bis 10, **dadurch gekennzeichnet, dass** das mindestens eine Peripheriegerät eine Haube ist, die gemeinsam mit Wandungen des Basisgeräts und/oder des Gefäßblocks oder Wechselblocks einen Raum für Laborgefäße umschließt.

12. Vorrichtung nach einem der Ansprüche 1 bis 11, **dadurch gekennzeichnet, dass** das Basisgerät mindestens einen Antrieb aufweist, durch den sich die mindestens eine Gefäßaufnahme in eine Mischbewegung versetzen lässt.

13. Vorrichtung nach einem der Ansprüche 1 bis 12, **dadurch gekennzeichnet, dass** die Halterung am Basisgerät und das mindestens eine Peripheriegerät jeweils mindestens ein formschlüssiges Positionierelement haben, die zusammen mindestens einen Freiheitsgrad des mindestens einen Peripheriegeräts festlegen.

14. Vorrichtung nach Anspruch 13, **dadurch gekennzeichnet dass** magnetische Verbindungselemente, insbesondere ferromagnetische, die Positionierelemente in der definierten Position zusammen halten.

15. Peripheriegerät für eine Vorrichtung gemäß einem der Ansprüche 1 bis 14, insbesondere ein Wechselblock und/oder eine Haube.

16. Verwendung der Vorrichtung gemäß einem der Ansprüche 1 bis 14 und/oder des Peripheriegeräts gemäß Anspruch 15 für biologische, biochemische, molekularbiologische und/oder chemische Anwendungen im Labor.

## Claims

1. Apparatus for maintaining the temperature of laboratory vessels having
- at least one vessel holder for holding the laboratory vessels
- at least one peripheral device of removable design and having
- a base device which has a temperature control apparatus and a support for setting the at least one removable peripheral device in a given position, **characterised in that** the base device and the at least one peripheral device each have at least one coupling element which, when the peripheral device is set on the base device in the given position, form at least one releasable coupling pair through which electrical power and/or at least one signal can be transmitted, wherein the apparatus gives a user a visual or acoustic signal relating to the peripheral device.

2. Apparatus according to claim 1, **characterised in that** the respective coupling elements of the at least one releasable coupling pair are electrically isolated from each other.

3. Apparatus according to claim 2, **characterised in that** electrical power and/or at least one signal can be transmitted optically and/or inductively and/or capacitively through the at least one releasable coupling pair each.

4. Apparatus according to any of claims 1 to 3, **characterised in that** in the base device and in the peripheral device is in each case at least one coupling element, a coil, which both together in the given position form the at least one releasable coupling pair.

5. Apparatus according to claim 4, **characterised in that** an electrical current flows through the coil in the base device only when a sensor present in the base device detects the peripheral device.

6. Apparatus according to claim 5, **characterised in that** the electrical power is transmitted via the coil in the base device to the coil in the peripheral device by means of frequencies within the range from 250 to 500 kHz.

7. Apparatus according to claim 2 or 3, **characterised in that** in the base device is the at least one coupling element, an LED, in particular an infrared LED, and in the peripheral device is the at least one coupling element, a photoreceiver, photodiode, a phototransistor or a light-dependent resistor (LDR), or vice versa.

8. Apparatus according to any of claims 1 to 7, **characterised in that** the peripheral device has at least one sensor and/or at least one integrated circuit (IC), wherein a signal can be transmitted from the sensor and/or the IC to the base device and/or from the base device to the peripheral device by the at least one coupling pair.

9. Apparatus according to any of claims 2 to 8, **characterised in that** the base device and the least one peripheral device each have at least one electrical contact element which, when the peripheral device is set on the base device in the given position, form at least one releasable conductive contact by which electrical power can be transmitted from the base device to an electrical appliance in the peripheral device.

10. Apparatus according to any of claims 1 to 9, **characterised in that** the at least one vessel holder is a depression or recess in a permanently installed vessel block or in a completely removable vessel block.

11. Apparatus according to any of claims 1 to 10, **characterised in that** the at least one peripheral device is a hood which, together with walls of the base device and/or of the vessel block or exchangeable block, encloses a space for laboratory vessels.

12. Apparatus according to any of claims 1 to 11, **characterised in that** the base device has at least one drive by which the at least one vessel holder can be set in motion for mixing.

13. Apparatus according to any of claims 1 to 12, **characterised in that** the support on the base device and the at least one peripheral device each have at least one form-locking positioning element which together fix at least one degree of freedom of the at least one peripheral device.

14. Apparatus according to claim 13, **characterised in that** magnetic connecting elements, in particular ferromagnetic connecting elements, hold the positioning elements together in the given position.

15. Peripheral device for an apparatus according to any of claims 1 to 14, in particular an exchangeable block and/or a hood.

16. Use of the apparatus according to any of claims 1 to 14 and/or of the peripheral device according to claim 15 for biological, biochemical, molecular biology and/or chemical applications in the laboratory.

## Revendications

1. Dispositif d'équilibrage de la température de récipients de laboratoire avec
- au moins un logement de récipient pour le logement des récipients de laboratoire
- au moins un appareil périphérique configuré de manière amovible et avec
- un appareil de base qui a un dispositif d'équilibrage de la température et un support pour le placement de l'au moins un appareil périphérique amovible dans une position définie, **caractérisé en ce que** l'appareil de base et l'au moins un appareil périphérique présentent respectivement au moins un élément de couplage, lesquels forment, lors du placement de l'appareil périphérique sur l'appareil de base dans la position définie, au moins une paire de couplage amovible, par laquelle de la puissance électrique et/ou au moins un signal peut être transmis, dans lequel le dispositif donne à un utilisateur un signal visuel ou acoustique concernant l'appareil périphérique.

2. Dispositif selon la revendication 1, **caractérisé en ce que** les éléments de couplage respectifs de l'au moins une paire de couplage amovible sont séparés par voie galvanique l'un de l'autre.

3. Dispositif selon la revendication 2, **caractérisé en ce que** par l'au moins une paire de couplage amovible respective, de la puissance électrique et/ou au moins un signal peut être transmis par voie optique et/ou inductive et/ou capacitive.

4. Dispositif selon l'une des revendications 1 à 3, **caractérisé en ce que** dans l'appareil de base et dans l'appareil périphérique, respectivement au moins un élément de couplage est une bobine, lesquels forment tous deux ensemble dans la position définie l'au moins une paire de couplage amovible.

5. Dispositif selon la revendication 4, **caractérisé en ce qu'**un courant électrique ne passe par la bobine dans l'appareil de base que lorsqu'un capteur présent dans l'appareil de base détecte l'appareil périphérique.

6. Dispositif selon la revendication 5, **caractérisé en ce que** la puissance électrique est transmise par le biais de la bobine dans l'appareil de base à la bobine dans l'appareil périphérique au moyen de fréquences dans la plage de 250 à 500 kHz.

7. Dispositif selon la revendication 2 ou 3, **caractérisé en ce que** dans l'appareil de base, l'au moins un élément de couplage est une DEL, en particulier une DEL à infrarouge, et dans l'appareil périphérique, l'au moins un élément de couplage est un photorécepteur, une photodiode, un phototransistor ou une résistance dépendant de la lumière (Light Dependent Resistor/LDR), ou inversement.

8. Dispositif selon l'une quelconque des revendications 1 à 7, **caractérisé en ce que** l'appareil périphérique présente au moins un capteur et/ou au moins un circuit (CI) intégré, dans lequel par l'au moins une paire de couplage, un signal peut être transmis du capteur et/ou du CI dans l'appareil de base et/ou de l'appareil de base dans l'appareil périphérique.

9. Dispositif selon l'une des revendications 2 à 8, **caractérisé en ce que** l'appareil de base et l'au moins un appareil périphérique présentent respectivement au moins un élément de contact galvanique, lesquels forment, lors du placement de l'appareil périphérique sur l'appareil de base dans la position définie, au moins un contact conducteur amovible, par lequel de la puissance électrique peut être transmise de l'appareil de base à un consommateur électrique dans l'appareil périphérique.

10. Dispositif selon l'une des revendications 1 à 9, **caractérisé en ce que** l'au moins un logement de récipient est une cavité ou un évidement dans un bloc de récipient installé en permanence ou dans un bloc de récipient configuré de manière complètement amovible.

11. Dispositif selon l'une des revendications 1 à 10, **caractérisé en ce que** l'au moins un appareil périphérique est un capot qui entoure, conjointement avec des parois de l'appareil de base et/ou du bloc de récipient ou bloc interchangeable, un espace pour des récipients de laboratoire.

12. Dispositif selon l'une des revendications 1 à 11, **caractérisé en ce que** l'appareil de base présente au moins un entraînement, par lequel l'au moins un logement de récipient peut être mis en un mouvement de mélange.

13. Dispositif selon l'une des revendications 1 à 12, **caractérisé en ce que** le support sur l'appareil de base et l'au moins un appareil périphérique présentent respectivement au moins un élément de positionnement à complémentarité de formes, lesquels déterminent ensemble au moins un degré de liberté de l'au moins un appareil périphérique.

14. Dispositif selon la revendication 13, **caractérisé en ce que** des éléments de liaison magnétiques, en particulier ferromagnétiques, maintiennent ensemble les éléments de positionnement dans la position définie.

15. Appareil périphérique pour un dispositif selon l'une des revendications 1 à 14, en particulier un bloc interchangeable et/ou un capot.

16. Utilisation du dispositif selon l'une des revendications 1 à 14 et/ou de l'appareil périphérique selon la revendication 15 pour des applications biologiques, biochimiques, de biologie moléculaire et/ou chimiques en laboratoire.
